# EUROPÄISCHE PATENTANMELDUNG

(11) **EP 2 824 817 A1**
(43) Veröffentlichungstag der Anmeldung: **14.01.2015**
(21) Anmeldenummer: 13175524.1
(22) Anmeldetag: 08.07.2013
(51) Int. Cl.: H02M 3/157, H02M 1/00

(54) **Steuerungsverfahren für eine Schaltungsanordnung mit einem Gleichspannungswandler und Schaltungsanordnung**

(71) Anmelder: Inventio AG, 6052 Hergiswil NW (CH)
(72) Erfinder: Tomek, Stephan, 5646 Abtwil AG (CH)
(74) Vertreter: Blöchle, Hans

(57) **Zusammenfassung**

Das Verfahren dient der Steuerung einer Schaltungsanordnung (1), die einen Gleichspannungswandler (20) umfasst, der wenigstens einen Gleichspannungsausgang (201, 202, ..., 20X) aufweist, an den ein Verbraucher (21, 22, 23) anschliessbar ist, und der mittels eines Prozessors (11) derart steuerbar ist, dass er zwischen einem Ruhezustand und einem Betriebszustand umschaltbar ist. Erfindungsgemäss ist ein Kondensator (13) vorgesehen, der den Prozessor (11) mit Energie versorgt und der mit einer Messeinheit (12) verbunden oder verbindbar ist, welche die am Kondensator (13) anliegende Spannung misst und einen entsprechenden Messwert zum Prozessor (11) überträgt, welcher ein Steuerprogramm abarbeitet, das die Abweichung des Messwerts von einem Sollwert der Spannung am Kondensator (13) bestimmt und in Abhängigkeit davon den Gleichspannungswandler (20) temporär aus dem Ruhezustand in den Betriebszustand versetzt und den wenigstens einen Ausgang (20X) des Gleichspannungswandlers (20), sofern eine Verbindung nicht bereits vorliegt, mit dem Kondensator (13) verbindet.

## Beschreibung

Die Erfindung betrifft ein Verfahren zur Steuerung einer Schaltungsanordnung, die einen Gleichspannungswandler umfasst, sowie eine Schaltungsanordnung mit einem Gleichspannungswandler, die mittels dieses Verfahrens steuerbar ist. Insbesondere betrifft die Erfindung ein Verfahren zur Steuerung einer Schaltungsanordnung, die für den Betrieb einer Aufzugsanlage eingesetzt wird.

In elektrischen Anlagen und Geräten werden Stromversorgungseinheiten (Netzgeräte) eingesetzt, die wenigstens eine Gleichspannung mit einem definierten Spannungswert liefern. Dazu werden oft Gleichspannungswandler verwendet, mittels denen aus einer ersten Gleichspannung eine oder mehrere zweite Gleichspannungen gewonnen werden können.

Elementare Schaltungen von Gleichspannungswandlern sind zum Beispiel in der Firmenpublikation, »DC-DC Converters: A Primer«, Jaycar Electronics Reference Data Sheet: dcdcconv.pdf, 2001, beschrieben.

Ein Gleichspannungswandler mit einem Eingang, dem eine Gleichspannung zugeführt wird und mehreren Ausgängen, an denen unterschiedliche Gleichspannungen abgegeben werden, ist aus der Offenlegungsschrift US4680688A bekannt. Dieser Gleichspannungswandler umfasst einen Transformator mit einer Primärwicklung und mehreren Sekundärwicklungen, einen Schalterkreis zum Ein- und Ausschalten der Zufuhr der Eingangsgleichspannung zur Primärwicklung, Gleichrichter und Glättungskreise zum Gleichrichten und Glätten der in den Sekundärwicklungen induzierten Wechselspannungen, sowie einen Steuerkreis, der eine Ausgangsgleichspannung misst und den Ein/Aus-Betrieb des Schalterkreises derart steuert, dass die gemessene Ausgangsgleichspannung auf einer konstanten Grösse gehalten wird.

Dazu wird ein Komparator vorgesehen, welcher aus der gemessenen Ausgangsgleichspannung und einer Referenzspannung ein Differenzsignal bildet und einem Impulsbreiten-Modulationskreis PWM zuführt. Der Impulsbreiten-Modulationskreis PWM bildet ein entsprechendes Impulsbreitensignal, mittels dessen der mit der Primärwirkung verbundene Schalterkreis gesteuert wird. Sofern der Ausgang dieses Gleichspannungswandlers nicht belastet wird, bleibt die Ausgangsgleichspannung konstant, weshalb das gebildete Differenzsignal anzeigt, dass keine Schaltvorgänge erforderlich sind, um Energie zu übertragen. Der Gleichspannungswandler erreicht somit automatisch einen Ruhezustand.

Aus der Offenlegungsschrift US7576601B2 ist ein Gleichspannungswandler bekannt, bei dem die Ausgangsspannung ebenfalls mit einer Referenzspannung verglichen und ein Differenzsignal gebildet wird. Dabei wird vorgesehen, dass dieses Differenzsignal im Ruhezustand stets nur wenig unterhalb des Minimalwerts des Differenzsignals gehalten wird, welcher im Betriebszustand auftreten kann. Auf diese Weise wird es möglich, den Gleichspannungswandler rasch aus dem Ruhezustand in den Betriebszustand zu versetzen.

Weiter ist bekannt, dass Gleichspannungswandler signifikante Verluste aufweisen können. Das Verhältnis von Ausgangsleistung zu Eingangsleistung liegt im Bereich von 80-90 %. Eine weitere Eigenschaft von Gleichspannungswandlern ist, dass deren Effizienz bei geringerer Belastung und reduziertem Ausgangsstrom stark sinkt. Bei autonomen Systemen mit Energiespeichern treten daher auch dann beachtliche Verluste auf, wenn sie keine Leistung an Verbraucher abgegeben.

Aus der Offenlegungsschrift US6958596B1 ist ein Gleichspannungswandler bekannt, welcher bedarfsweise ausgeschaltet werden kann. Der Gleichspannungswandler weist einen Komparator auf, welcher aus einer Ausgangsspannung und einer Eingangsspannung ein Differenzsignal bildet, welches einem Impulsbreiten-Modulationskreis PWM über eine Filterstufe zugeführt wird, die Kondensatoren aufweist. Damit der Gleichspannungswandler nach dem Umschalten vom Ruhezustand in den Betriebszustand sofort operativ ist, wird die am Ausgang der Filterstufe vorliegende Spannung abgetastet und während des Ruhezustands zwischengespeichert. Beim Übergang vom Ruhezustand in den Betriebszustand wird die zwischengespeicherte Spannung an den Komparator angelegt, so dass dieser im normalen Arbeitsbereich betrieben wird, bevor sich die Spannungen in der Filterstufe wieder aufgebaut haben. Während des Ruhezustands wird eine zweite Stromversorgungseinheit zugeschaltet, die nur minimale Energieverluste aufweist und die im Ruhezustand die benötigte Restenergie zur Verfügung stellen kann. Nachteilig bei dieser Vorrichtung ist hingegen, dass eine weitere Stromversorgungseinheit erforderlich ist.

Insbesondere in Aufzugsanlagen, wie sie in der US 6,199,667 B 1 beschrieben sind, werden elektrische Systeme, die oft mittels Gleichspannungswandlern gespeist werden, vorzugsweise in den Ruhezustand versetzt, wenn keine Transporte auszuführen sind. Dazu werden die Systeme in einen Zustand versetzt, in dem der Energieverbrauch und Energieverluste wesentlich reduziert werden. Aufgrund des weiteren Betriebs der Energieversorgungssysteme verbleiben jedoch regelmässig beachtliche Verluste.

Der vorliegenden Erfindung liegt daher die Aufgabe zu Grunde, ein verbessertes Verfahren zur Steuerung einer Schaltungsanordnung anzugeben, die einen Gleichspannungswandler umfasst. Ferner ist eine verbesserte Schaltungsanordnung mit einem Gleichspannungswandler anzugeben, die mittels dieses Verfahrens steuerbar ist.

Insbesondere sind ein Verfahren und eine Schaltungsanordnung anzugeben, die für den effizienten Betrieb von Aufzugsanlagen geeignet sind, die oft über längere Zeit nicht benutzt werden.

Insbesondere ist eine Schaltungsanordnung mit einem Gleichspannungswandler anzugeben, welcher in einen Ruhezustand versetzt werden kann, während die weiteren Funktionen der Schaltungsanordnung mit minimalem Aufwand aufrechterhalten werden können.

Der Gleichspannungswandler soll in allen Betriebsphasen mit optimaler Effizienz betrieben werden können. Innerhalb des Ruhezustands der Schaltungsanordnung sollen Verluste bei der Energieversorgung hingegen praktisch vollständig vermieden werden.

Die Schaltungsanordnung soll einfach aufgebaut und mit geringem Aufwand steuerbar sein.

Die in den unabhängigen Patentansprüchen definierte Erfindung löst diese Aufgabe. Weitere vorteilhafte Ausführungen sind in den abhängigen Ansprüchen beschrieben.

Das Verfahren dient der Steuerung einer Schaltungsanordnung, die einen Gleichspannungswandler umfasst, der wenigstens einen Gleichspannungsausgang aufweist, an den ein Verbraucher anschliessbar ist und der mittels eines Prozessors derart steuerbar ist, dass er zwischen einem Ruhezustand und einem Betriebszustand umschaltbar ist.

Erfindungsgemäss ist ein Kondensator vorgesehen, der den Prozessor mit Energie versorgt und der mit einer Messeinheit verbunden oder verbindbar ist, welche die am Kondensator anliegende Spannung misst und einen entsprechenden Messwert zum Prozessor überträgt, welcher ein Steuerprogramm abarbeitet, das die Abweichung des Messwerts von einem Sollwert der Spannung am Kondensator oder das Überschreiten oder Unterschreiten eines Schwellwerts bestimmt und in Abhängigkeit davon den Gleichspannungswandler temporär aus dem Ruhezustand in den Betriebszustand versetzt und den wenigstens einen Ausgang des Gleichspannungswandlers, sofern eine Verbindung nicht bereits vorliegt, mit dem Kondensator verbindet.

Das erfindungsgemässe Verfahren erlaubt einen effizienten Betrieb der Schaltungsanordnung ohne Verwendung einer weiteren elektronischen Stromversorgungseinheit. Anhand des Verfahrens kann der Gleichspannungswandler stets in einem optimalen Arbeitsbereich mit hoher Effizienz betrieben werden.

Der Prozessor wird von einem Kondensator gespeist, der vom Gleichspannungswandler geladen wird. Für die Zeit, in der der Gleichspannungswandler für externe Verbraucher nicht benötigt und daher in den Ruhezustand versetzt wird, werden Ladungsverluste des Kondensators vorzugsweise periodisch und innerhalb kurzer Zeitintervalle durch den Gleichspannungswandler wieder kompensiert, der zu diesem Zweck temporär in den Betriebszustand versetzt wird.

Dazu wird die Abweichung der gemessenen Spannung am Kondensator von einem Sollwert vorzugsweise mit einem Schwellwert verglichen und der Gleichspannungswandler in den Betriebszustand versetzt, falls dieser Schwellwert überschritten wurde. Der Messwert kann auch direkt mit einem vorgesehenen Schwellwert verglichen werden.

Der Schwellwert wird vorzugsweise in Abhängigkeit der Belastung des Kondensators, vorzugsweise in Abhängigkeit des vom Kondensator abgegebenen Stromes, gegebenenfalls unter Berücksichtigung der minimal erforderlichen Spannung am Kondensator, festgelegt. Sofern nur eine sehr langsame Entladung des Kondensators erfolgt, kann ein relativ tiefer Schwellwert gewählt werden. Sofern hingegen eine rasche Entladung erfolgt, soll dies mit einem relativ hohen Schwellwert rasch erfasst werden können, um den Ladeprozess einzuleiten, bevor die Betriebsspannung nicht mehr einen genügenden Wert aufweist.

Der Gleichspannungswandler wird in der Folge für eine feste oder variable erste Zeitdauer in den Betriebszustand versetzt, die vorzugsweise in Abhängigkeit der Abweichung des Messwerts vom Sollwert der Spannung am Kondensator festgelegt wird. In einfachen Ausgestaltungen wird vorgesehen, dass der Kondensator beispielsweise immer für eine konstante Zeitdauer geladen wird, die im Bereich von 10-20 Sekunden liegt.

Alternativ kann auch die Spannung am Kondensator gemessen und die Ladephase abgeschlossen werden, wenn ein vorgesehener Spannungswert erreicht ist.

Innerhalb der kurzen Ladephasen überträgt der Gleichspannungswandler einen hohen Ladestrom an den Kondensator, so dass dieser bei hoher Effizienz des Gleichspannungswandlers rasch geladen wird. Der Gleichspannungswandler wird somit nicht nur im normalen Betriebszustand der Schaltungsanordnung, sondern auch in den Phasen optimal betrieben, in denen sich die Schaltungsanordnung im Ruhezustand befindet. Im normalen Betriebszustand liefert der Gleichspannungswandler, der entsprechend den Verbrauchern dimensioniert ist, einen Strom mit hoher Effizienz, welcher nahe bei der maximal erreichbaren Stromstärke des Gleichspannungswandlers liegt. Innerhalb des Ruhezustands der Schaltungsanordnung gibt der Gleichspannungswandler in den Phasen, in denen er für die Speisung des Kondensators in den normalen Betriebszustand versetzt wird, wiederum einen Ladestrom an den Kondensator ab, der nahe bei der maximal erreichbaren Stromstärke des Gleichspannungswandlers liegt. Auch in diesen sehr kurzen Betriebszuständen wird der Gleichspannungswandler wiederum in einem Bereich betrieben, in dem die maximal mögliche Effizienz erzielt wird.

Durch die Verwendung des Kondensators gelingt es somit, den Gleichspannungswandler vollständig in den Ruhezustand zu versetzen und entsprechende Verluste zu vermeiden, welche ein Gleichspannungswandler selbst bei minimaler Leistungsabgabe stets aufweist. In den kurzen Phasen, in denen der Gleichspannungswandler aus dem Ruhezustand in den Betriebszustand versetzt wird, arbeitet der Gleichspannungswandler wiederum mit hoher Effizienz.

Durch die Verwendung des Kondensators gelingt es ferner, den Einsatz einer weiteren Stromversorgungseinheit zu vermeiden, welche für den Betrieb im Ruhezustand der Schaltungsanordnung bei permanent abgeschaltetem Gleichspannungswandler ansonsten erforderlich wäre.

Bei Vorrichtungen, die über längere Zeit in den Ruhezustand versetzt werden, kann anhand der erfindungsgemässen Massnahmen über längere Zeit eine beachtliche Energieeinsparung erzielt werden. Dies ist insbesondere bei Schaltungsanordnungen der Fall, die für den Betrieb von Aufzugsanlagen verwendet werden, welche oft über längere Zeitperioden nicht benutzt und in den Ruhestand versetzt werden. Anhand des erfindungsgemässen Verfahrens können die in diesem Zustand auftretenden Verlustleistungen auf ein Minimum reduziert werden.

In einer vorzugsweisen Ausgestaltung der Schaltungsanordnung wird nicht nur der Gleichspannungswandler in den Ruhezustand versetzt, wenn keine externen Verbraucher mit Energie zu versorgen sind. Zusätzlich wird auch der Prozessor so weit in den Ruhezustand versetzt, dass nur noch die Prozessorfunktionen aufrechterhalten werden, die für den Rücktransfer der Schaltungsanordnung vom Ruhezustand in den Betriebszustand erforderlich sind. In der Folge bleiben nur noch wenige vom Kondensator gespeiste elektronische Einheiten aktiv. Auf diese Weise gelingt es, den Energieverbrauch der Schaltungsanordnung während des Ruhezustands des Gleichspannungswandlers weiter zu reduzieren. Zur Überwachung des Ladezustands des Kondensators wird der Prozessor durch das Steuerprogramm nach Ablauf einer zweiten Zeitdauer nach Übergang in den Ruhestand wieder in einen Zustand versetzt, in dem die Spannung am Kondensator gemessen, die Abweichung vom Sollwert bestimmt und der Gleichspannungswandler entsprechend gesteuert wird. Das Steuerprogramm gewährleistet somit die Aufrechterhaltung der minimal benötigten Stromversorgung innerhalb längeren Ruhephasen der Schaltungsanordnung.

Beispielsweise aktiviert das Steuerprogramm einen Zeitgeber, der vor dem Übergang in den Ruhezustand gestartet wird und der nach Ablauf einer variablen oder konstanten zweiten Zeitdauer ein Wecksignal an den Prozessor bzw. das Steuerprogramm abgibt.

Diese zweite Zeitdauer wird vorzugsweise unter Berücksichtigung der Kapazität des eingesetzten Kondensators und der gewählten Konfiguration der Schaltungsanordnung gewählt, die innerhalb der zweiten Zeitdauer, d.h. innerhalb des Ruhezustands des Gleichspannungswandlers mit Strom zu versorgen ist. Sofern nur wenig Energie benötigt wird und der Kondensator eine grosse Kapazität aufweist, erfolgt eine langsame Entladung des Kondensators, weshalb die daran anliegende Spannung in grösseren zeitlichen Abständen geprüft werden kann.

In weiteren vorzugsweisen Ausgestaltungen ist wenigstens ein weiterer Kondensator vorgesehen, der während der ersten Zeitdauer ebenfalls geladen wird und während der zweiten Zeitdauer bzw. während des Ruhezustands der Schaltungsanordnung wahlweise zuschaltbar ist, um die gesicherte Stromversorgung zu gewährleisten. Beispielsweise wird die Stromversorgung auf den weiteren Kondensator umgeschaltet, nachdem die Abweichung des Messwerts vom Sollwert der Spannung am Kondensator den ersten oder einen zweiten Schwellwert überschreitet. Sofern die Spannung am ersten Kondensator ungenügend sein sollte, so wird durch Zuschaltung des zweiten Kondensators und gegebenenfalls durch anschliessende Abschaltung des ersten Kondensators eine mögliche Fehlfunktion aufgrund ungenügender Betriebsspannung vermieden. Ferner können die Kondensatoren alternierend oder sequenziell geladen werden, während die Stromversorgung des Prozessors aufrecht gehalten wird.

Im Folgenden wird die Erfindung anhand von Ausführungsbeispielen im Zusammenhang mit den Figuren näher erläutert.

Es zeigen:
- **Fig. 1**: eine erfindungsgemässe Schaltungsanordnung 1 mit einem Gleichspannungswandler 20 und einem Prozessor 11, dessen Speiseeingang 111 mit einem Kondensator 13 verbunden ist; und
- **Fig. 2a-c**: Diagramme, die den Zustand des Gleichspannungswandlers 20 und den Zustand des Prozessors 11 sowie den Verlauf der Spannung am Kondensator 13 während der Anwendung des erfindungsgemässen Verfahrens exemplarisch zeigen.

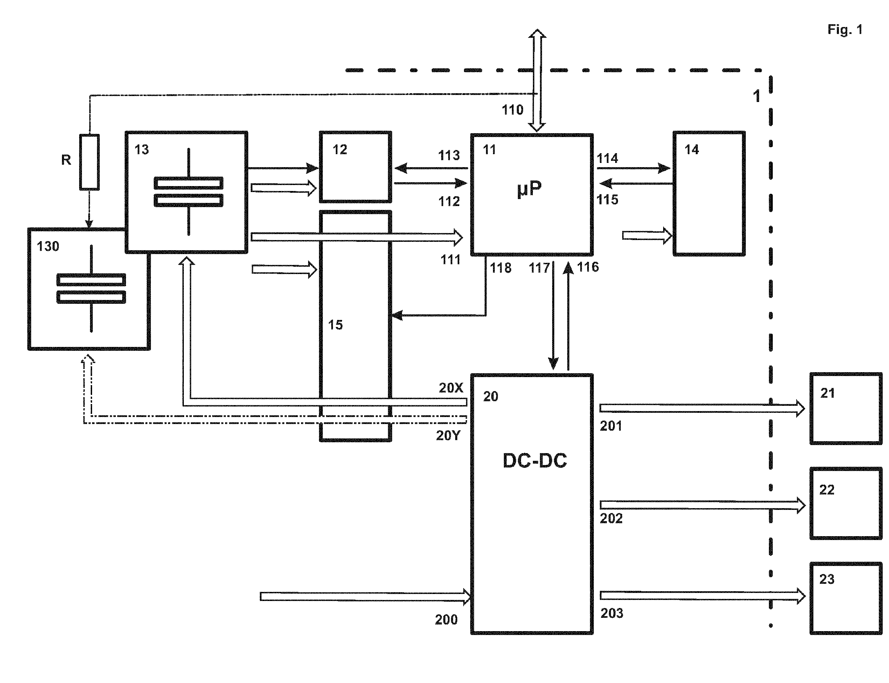

Figur 1 zeigt eine erfindungsgemässe Schaltungsanordnung 1 mit einem Prozessor 11 und einem Gleichspannungswandler 20, dem an einem Gleichspannungseingang 200 eine Gleichspannung zugeführt wird, und von dem an Gleichspannungsausgängen 201, 202, 203 Gleichspannungen an externe Verbraucher 21, 22, 23, beispielsweise an Systemeinheiten, zum Beispiel die Steuerung, einer Aufzugsanlage, abgegeben werden.

Der Gleichspannungswandler 20 weist ferner zwei Gleichspannungsausgänge 20X und 20Y auf, die über eine Schalteinheit 15 mit einem ersten Kondensator 13 und einem vorzugsweise vorgesehenen Hilfskondensator 130 verbindbar sind, um diese zu laden. Der erste Kondensator 13 ist beispielsweise ein Aluminium-Elektrolyt Kondensator mit einer Kapazität von 1000 µF und einer Nennspannung von 6,3 Volt. Der Hilfskondensator 130, der vorzugsweise während den Umschaltvorgängen und Ladevorgängen während der ersten Zeitdauer eingesetzt wird, kann eine entsprechend reduzierte Kapazität von beispielsweise 250 µF aufweisen. Dementsprechend kann der Hilfskondensator 130 auch schneller geladen und für die Stromversorgung bereitgestellt werden. Wie dies in Figur 1 schematisch illustriert ist, wird der mit einer reduzierten Kapazität versehene Hilfskondensator 130 in vorzugsweisen Ausgestaltungen über eine Busschnittstelle 110 gespeist, um die Schaltungsanordnung 1 zu initialisieren zu können. Aufgrund der geringeren Kapazität des Hilfskondensators 130 kann dieser über einen Widerstand R rasch geladen werden, so dass nach kurzer Zeit eine Betriebsspannung für die Schaltungsanordnung 1 zur Verfügung steht und diese in den Betriebszustand versetzt werden kann. Alternativ kann die Versorgungsspannung auch von der Gleichspannung abgeleitet werden, die an den Gleichspannungseingang 200 des Gleichspannungswandlers 20 angelegt wird.

Die Schaltungsanordnung 1 umfasst zudem einen Prozessor 11, der einen Speiseeingang 111 aufweist, welcher über die Schalteinheit 15 mit dem Kondensator 13 und gegebenenfalls mit dem Hilfskondensator 130 verbindbar ist. Der Prozessor 11 kann über die Busschnittstelle 110 mit einem externen Prozessor, beispielsweise mit der Zentralsteuerung der Aufzugsanlage kommunizieren, welche die Schaltungsanordnung 1 mit dem Gleichspannungswandler 20 wahlweise in den Ruhestand und wieder in den Betriebszustand versetzen kann.

Der Prozessor 11, der vorzugsweise eine darin integrierte Speichereinheit mit einem Steuerprogramm aufweist, weist ferner zahlreiche weitere Signaleingänge und Steuerausgänge auf.

Über einen Steuerausgang 117 steuert der Prozessor 11 den Gleichspannungswandler 20, von dem er Statusmeldungen über einen Signaleingang 116 empfängt. Über einen Steuerausgang 118 wird die Schalteinheit 15 betätigt, um die Kondensatoren 13, 130 entweder mit dem Speiseeingang 110 des Prozessors 11 oder mit den Gleichspannungsausgängen 20X und 20Y des Gleichspannungswandlers 20 zu verbinden. Die Verwendung von wenigstens zwei Kondensatoren 13, 130 hat den Vorteil, dass der erste Kondensator 13 geladen werden kann, während der zweite Kondensator 130 am Speiseeingang 111 des Prozessors 11 anliegt. Anschliessend kann der zweite Kondensator 130 geladen werden, während der erste Kondensator 13 am Speiseeingang 111 des Prozessors 11 anliegt. Nachdem beide Kondensatoren vollständig geladen wurden, werden vorzugsweise beide parallel geschaltet, so dass die maximale Kapazität der geladenen Kondensatoren 13, 130 am Speiseeingang 111 des Prozessors 11 anliegt.

Zur Messung des Ladezustandes des ersten und vorzugsweise auch des zweiten Kondensators 13, 130 ist eine Messeinheit 12 vorgesehen. Die Messeinheit 12, die über einen Steuerausgang 113 des Prozessors 11 gesteuert wird, tastet die am Kondensator 13 anliegende Spannung ab und liefert einen entsprechenden analogen oder digitalen Messwert an einen Signaleingang 112 des Prozessors 11. Der analoge Signalwert wird in der Messeinheit 12 oder im Prozessor 11 in einen digitalen Messwert gewandelt.

Nachdem der Gleichspannungswandler 20 vom Prozessor 11 in den Ruhezustand versetzt wurde und die Speisung daher nur noch über die Kondensatoren 13, 130 erfolgt, wird erfindungsgemäss der Ladezustand der Kondensatoren 13, 130 regelmässig gemessen. Der Messwert oder die Abweichung des Messwerts vom Sollwert wird mittels des Steuerprogramms mit einem vorgesehenen Schwellwert verglichen, wonach der Gleichspannungswandler 20 aktiviert und die Kondensatoren 13, 130 geladen werden, falls der Schwellwert überschritten bzw. unterschritten wurde.

Bei entsprechender Dimensionierung der Kondensatoren 13, 130 kann die Überprüfung des Ladezustandes in grösseren zeitlichen Abständen durchgeführt werden. Eine kontinuierliche Überwachung ist nicht erforderlich. Die Überprüfung erfolgt in festen oder variablen Zeitabständen. Sofern Teile der Schaltungsanordnung 1 auch im Ruhezustand der Schaltungsanordnung 1 in unterschiedlichen Konfigurationen im Betrieb verbleiben, treten im Ruhezustand unterschiedliche Belastungen und Entladungen der Kondensatoren 13, 130 auf. Die zeitlichen Abstände, in denen die Überprüfung durchgeführt wird, werden daher vorzugsweise variabel, d.h. angepasst an die erwarteten Belastungen gewählt. Über einen Steuerausgang 114 wird daher ein Zeitgeber 14 entsprechend programmiert und gestartet, der nach der programmierten Zeitdauer ein Wecksignal an einen Signaleingang 115 des Prozessors 11 abgibt.

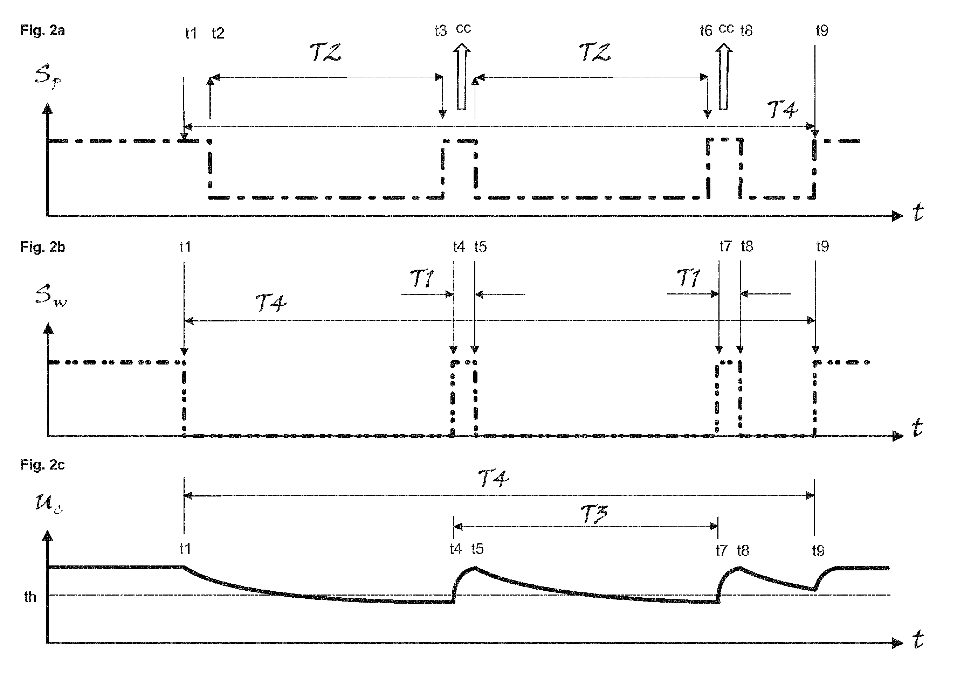

Der Betrieb der Schaltungsanordnung 1 wird nachstehend anhand der Diagramme von Figur 2 erläutert, die den Zustand des Gleichspannungswandlers 20 und den Zustand des Prozessors 11 sowie den Verlauf der Spannung am Kondensator 13 während der Anwendung des erfindungsgemässen Verfahrens exemplarisch zeigen.

Figur 2a zeigt exemplarisch den zeitlichen Verlauf des Zustandes SP des Prozessors 11, nach Erhalt eines Kommandos von einer zentralen Steuereinheit einer Aufzugsanlage zum Zeitpunkt t1 über die Busschnittstelle 110, mit dem die Schaltungsanordnung 1, insbesondere der Gleichspannungswandler 20 und vorzugsweise auf der Prozessor 11 in den Ruhezustand versetzt werden.

Während durch den Übergang des Gleichspannungswandlers 11 in den Ruhezustand bereits wesentliche Energieeinsparungen realisiert werden, gelingt es, durch die temporäre Überführung des Prozessors 11 in den Ruhestand, weitere wertvolle Energie zu sparen.

Figur 2b zeigt exemplarisch den zeitlichen Verlauf des Zustandes SW des Gleichspannungswandler 20, der vom Prozessor 11 in den Ruhezustand und wahlweise wieder zurück in den normalen Betriebszustand versetzt werden kann.

Figur 2c zeigt exemplarisch den zeitlichen Verlauf der Entladung und der Ladung des Kondensators 13 bzw. der daran anliegenden Spannung Uc während den Phasen, in denen der Gleichspannungswandler 20 und der Prozessor 11 in den Ruhezustand versetzt und kurzzeitig wieder aktiviert werden.

Wie erwähnt, erhält der Prozessor 11 zum Zeitpunkt t1 die Instruktion, die Schaltungsanordnung 1, insbesondere den Gleichspannungswandler 20, in den Ruhezustand zu versetzen. Praktisch ohne Verzögerung gibt der Prozessor 11 über den Steuerausgang 117 das Kommando an den Gleichspannungswandler 20 ab, in den Ruhezustand zu wechseln und den Betrieb einzustellen.

Zum Zeitpunkt t2, nach Erledigung von Abschlussroutinen geht der Prozessor 11 selbst in den Ruhezustand über. Im Rahmen der Abschlussroutinen wird z. B. der Zeitgeber 14 über den Steuerausgang 114 programmiert und gestartet. Ferner können Überprüfungen ausgeführt werden, wie die Überprüfung des Ladezustandes des Kondensators 13. Nach Ablauf einer Zeitdauer T2, zum Zeitpunkt t3, retourniert der Zeitgeber 14 ein Wecksignal an den Eingang 115 des Prozessors 11, der in den Betriebszustand zurückkehrt und über den Steuerausgang 113 die Messeinheit 12 aktiviert, welche den Ladezustand des Kondensators 13 misst und ein entsprechendes analoges und/oder digitales Messsignal an den Signaleingang 112 des Prozessors 11 retourniert. Das vom Prozessor 11 abgearbeitete Steuerprogramm vergleicht den Messwert mit einem Sollwert und stellt eine Abweichung fest, die einen der Schwellwert überschreitet. Alternativ vergleicht das Steuerprogramm den Messwert direkt mit dem in Figur 2c eingezeichneten Schwellwert th und stellt fest, dass dieser unterschritten wurde.

Aufgrund der festgestellten unzulässigen Abweichung vom Sollwert bzw. aufgrund des Unterschreitens des Schwellwerts th wird der Gleichspannungswandler 20 zum Zeitpunkt t4 wieder in den Betriebszustand versetzt und der Gleichspannungsausgang 20X mit dem Kondensator 13 verbunden. Der Kondensator 13 wird nun während der relativ kurzen Zeitdauer T1, beginnend mit dem Zeitpunkt t4 bis zum Zeitpunkt t5, mit einem hohen Ladestrom geladen. Anschliessend, zum Zeitpunkt t5, werden der Gleichspannungswandler 20 und der Prozessor 11 wieder in den Ruhezustand versetzt.

In Figur 2a ist gezeigt, dass nach der Aktivierung des Prozessors 11 zum Zeitpunkt t3 vom Steuerausgang 118 Kommandos cc an die Schalteinheit 15 abgegeben werden können, mittels denen die Kondensatoren 13, 130 alternierend mit dem Gleichspannungswandler 20 und dem Prozessor 11 verbunden werden. Während der erste Kondensator 13 geladen wird, wird der Prozessor 11 vom Hilfskondensator 130 mit Energie versorgt bzw. während der Hilfskondensator 130 geladen wird, wird der Prozessor 11 vom ersten Kondensator 13 mit Energie versorgt.

Nachdem der Gleichspannungswandler 20 und der Prozessor 11 zum Zeitpunkt t5 wieder in den Ruhezustand versetzt wurden, überwacht der Zeitgeber 14 wiederum die programmierte Zeitdauer T2 und überträgt zum Zeitpunkt t6 wieder ein Wecksignal an den Prozessor 11, welcher zum Zeitpunkt t7 den Gleichspannungswandler 20 wieder aktiviert, welcher wiederum für eine Zeitdauer T1 die Kondensatoren 13, 130 lädt. Zum Zeitpunkt t8 werden der Gleichspannungswandler 20 und der Prozessor 11 wieder in den Ruhezustand versetzt.

Zum Zeitpunkt t9 erhält der Prozessor 11 über die Busschnittstelle 110 die Instruktion von der Zentralsteuerung, die Schaltungsanordnung 1 wieder in den normalen Betriebszustand zu überführen. Der Prozessor 11 und der Gleichspannungswandler 20 werden daher nach minimalen Verzögerungen wieder aktiviert. Nach dem Zeitpunkt t9 werden die Kondensatoren 13, 130 wieder geladen.

In den Diagrammen sind die Zeitdauern T1, T2, T2 und T4 für die beschriebenen Vorgänge eingezeichnet. Die erste Zeitdauer T1 betrifft die Dauer für die der Gleichspannungswandler 11 aus dem Ruhezustand in den Betriebszustand überführt wird, um die Kondensatoren 13, 130 zu laden. Diese erste Zeitdauer T1 bezeichnet daher ebenfalls die Zeit, während der die Kondensatoren 13, 130 nachgeladen werden. Die Zeitdauer T2 betrifft die Zeit, für die der Prozessor 11 in den Ruhezustand versetzt wird. In Figur 2c ist ferner die Zeitdauer T3 eingezeichnet, welche die Zeitdauer zwischen zwei einander folgenden Zeitpunkten t4, t7 betrifft, an denen der Ladevorgang der Kondensatoren 13, 130 beginnt. Wie erwähnt können diese Zeitdauern T1, T2 und T3 fest oder variabel gewählt werden. Vorzugsweise überwacht der Prozessor 11 die im Ruhezustand anliegende Last und/oder den Verlauf der Entladung der Kondensatoren 13, 130, so dass die Zeit dauern T1, T2 und T3 optimiert werden können, um den Gleichspannungswandler 20 und den Prozessor 11 oder weitere Hilfssysteme möglichst wenig in Anspruch zu nehmen.

In den Figuren 2a, 2b und 2c ist ferner die Zeitdauer T4 eingezeichnet, für die die Schaltungsanordnung 1 in den Ruhezustand versetzt wird.

## Patentansprüche

1. Verfahren zur Steuerung einer Schaltungsanordnung (1), die insbesondere für den Betrieb einer Aufzugsanlage eingesetzt wird und die einen Gleichspannungswandler (20) umfasst, der wenigstens einen Gleichspannungsausgang (201, 202, ..., 20X) aufweist, an den ein Verbraucher (21, 22, 23) anschliessbar ist, und der mittels eines Prozessors (11) derart steuerbar ist, dass er zwischen einem Ruhezustand und einem Betriebszustand umschaltbar ist, **dadurch gekennzeichnet, dass** ein Kondensator (13) vorgesehen ist, der den Prozessor (11) mit Energie versorgt und der mit einer Messeinheit (12) verbunden oder verbindbar ist, welche die am Kondensator (13) anliegende Spannung misst und einen entsprechenden Messwert zum Prozessor (11) überträgt, welcher ein Steuerprogramm abarbeitet, das die Abweichung des Messwerts von einem Sollwert der Spannung am Kondensator (13) bestimmt und in Abhängigkeit davon den Gleichspannungswandler (20) temporär aus dem Ruhezustand in den Betriebszustand versetzt und den wenigstens einen Ausgang (20X) des Gleichspannungswandlers (20), sofern eine Verbindung nicht bereits vorliegt, mit dem Kondensator (13) verbindet.

2. Verfahren nach Anspruch 1, **dadurch gekennzeichnet, dass** der Gleichspannungswandler (20) in den Betriebszustand versetzt wird, sobald die Abweichung des Messwerts vom Sollwert der Spannung am Kondensator (13) einen festgelegten ersten Schwellwert überschreitet oder sobald der Messwert selbst den Schwellwert (th) unterschreitet.

3. Verfahren nach Anspruch 2, **dadurch gekennzeichnet, dass** der erste Schwellwert in Abhängigkeit der Belastung des Kondensators (13), vorzugsweise in Abhängigkeit des vom Kondensator (13) abgegebenen Stromes, gegebenenfalls unter Berücksichtigung der minimal erforderlichen Spannung am Kondensator (13), festgelegt wird.

4. Verfahren nach einem der Ansprüche 1-3, **dadurch gekennzeichnet, dass** der Gleichspannungswandler (20) für eine feste oder eine variable erste Zeitdauer in den Betriebszustand versetzt wird, die in Abhängigkeit der Abweichung des Messwerts vom Sollwert der Spannung am Kondensator (13) festgelegt wird.

5. Verfahren nach einem der Ansprüche 1-4, **dadurch gekennzeichnet, dass** der Gleichspannungswandler (20) für eine feste erste Zeitdauer in den Betriebszustand versetzt wird, innerhalb der der Kondensator (13) zumindest auf einen berechneten Minimalwert geladen wird.

6. Verfahren nach einem der Ansprüche 1-5, **dadurch gekennzeichnet, dass** das Steuerprogramm den Prozessor (11) jeweils nach Ablauf einer zweiten Zeitdauer nach Übergang in den Ruhestand, in dem wenigstens die für den Transfer in den Betriebszustand erforderlichen Prozessorfunktionen aufrecht erhalten bleiben, wieder in einen Zustand versetzt, in dem der Messwert eingeholt, die Abweichung vom Sollwert der Spannung am Kondensator (13) bestimmt und der Gleichspannungswandler (20) entsprechend gesteuert wird.

7. Verfahren nach Anspruch 6, **dadurch gekennzeichnet, dass** die variable oder konstante zweite Zeitdauer mittels eines Zeitgebers (14) bestimmt wird, der jeweils vom Prozessor (11) vor dem Übergang in den Ruhezustand gestartet wird und diesem nach Ablauf der zweiten Zeitdauer ein Wecksignal sendet.

8. Verfahren nach Anspruch 7, **dadurch gekennzeichnet, dass** die zweite Zeitdauer unter Berücksichtigung der Kapazität des Kondensator (13) und der Konfiguration der Schaltungsanordnung (1) gewählt wird, die innerhalb der zweiten Zeitdauer mit Strom zu versorgen ist.

9. Verfahren nach einem der Ansprüche 4-8, **dadurch gekennzeichnet, dass** weitere Kondensatoren (130) vorgesehen sind, die während der ersten Zeitdauer geladen werden und die während der zweiten Zeitdauer wahlweise zugeschaltet werden, um die Schaltungsanordnung (1) mit Strom zu versorgen.

10. Verfahren nach Anspruch 9, **dadurch gekennzeichnet, dass** die Stromversorgung auf den weiteren Kondensator (130) umgeschaltet wird, nachdem die Abweichung des Messwerts vom Sollwert der Spannung am Kondensator (13) den ersten oder einen zweiten Schwellwert überschreitet.

11. Schaltungsanordnung (1) insbesondere für eine Aufzugsanlage mit einem Gleichspannungswandler (20), der wenigstens einen Gleichspannungsausgang (201, 202, ..., 20X) aufweist, an dem ein Verbraucher (21, 22, 23) anschliessbar ist, und der mittels eines Prozessors (11) gemäss dem Verfahren nach einem der Ansprüche 1-10 steuerbar und entsprechend zwischen einem Ruhezustand und einem Betriebszustand umschaltbar ist.

12. Schaltungsanordnung (1) nach Anspruch 11, **dadurch gekennzeichnet, dass** ein Kondensator (13) vorgesehen ist, der mit einem Speiseeingang (111) des Prozessors (11) verbunden ist und der mit einer Messeinheit (12) verbunden oder verbindbar ist, von der die am Kondensator (13) anliegende Spannung messbar und ein entsprechender Messwert zum Prozessor (11) übertragbar ist, und dass ein vom Prozessor (11) abarbeitbares Steuerprogramm vorgesehen ist, mittels dessen die Abweichung des Messwerts von einem Sollwert der Spannung am Kondensator (13) bestimmbar und in Abhängigkeit davon der Gleichspannungswandler (20) temporär aus dem Ruhezustand in den Betriebszustand versetzbar und der wenigstens ein Ausgang (20X) des Gleichspannungswandlers (20), sofern eine Verbindung nicht bereits vorliegt, mit dem Kondensator (13) verbindbar ist.

13. Schaltungsanordnung (1) nach Anspruch 12, **dadurch gekennzeichnet, dass** der Prozessor (11) mit einem Zeitgeber (14) verbunden ist, mittels dessen die erste und/oder die zweite Zeitdauer (P1, P2) messbar ist.

14. Schaltungsanordnung (1) nach Anspruch 12 oder 13, **dadurch gekennzeichnet, dass** der Prozessor (11) mit einer Schalteinheit (15) verbunden ist, mittels der der Gleichspannungswandler (20) wenigstens mit dem ersten Kondensator (13) verbindbar ist.

15. Schaltungsanordnung (1) nach Anspruch 12, 13 oder 14, **dadurch gekennzeichnet, dass** der Prozessor (11) mit einer Schalteinheit (15) verbunden ist, mittels der wahlweise der erste Kondensator (13) oder ein weiterer Kondensator (130) mit dem Speiseeingang (111) des Prozessors (11) verbindbar ist.
